(19) Europäisches Patentamt
European Patent Office
Office européen des brevets

(11) Numéro de publication: **0 002 158**
**B1**

(12) # FASCICULE DE BREVET EUROPEEN

(21) Numéro de dépôt: **78400183.6**

(51) Int. Cl.³: **C 08 F 8/32,** C 10 M 1/32

(22) Date de dépôt: **16.11.78**

(54) **Alcénylsuccinimides, leur procédé de préparation et leur emploi comme additifs pour lubrifiants**

(30) Priorité: **21.11.77 FR 7734847**

(43) Date de publication de la demande:
**30.05.79 Bulletin 79/11**

(45) Mention de la délivrance du brevet:
**01.10.80 Bulletin 80/20**

(84) Etats contractants désignés:
**BE CH DE GB NL SE**

(56) Documents cités:
**FR - A - 2 336 442**

(73) Titulaire: **SOCIETE OROGIL**
**25, quai Paul Doumer**
**F - 92408 Courbevoie (FR)**

(72) Inventeur: **Soula, Gérard**
**33, rue Nungesser**
**F - 69330 Meyzieu (FR)**
**Lefevre, Jean-Paul**
**42, rue Démidoff**
**F - 76600 Le Havre (FR)**

(74) Mandataire: **Fabre, Madeleine-France et. al.**
**RHONE POULENC Service Brevets**
**Chimie et Polymères B.P. 753**
**F - 75360 Paris Cedex 08 (FR)**

**EP 0 002 158 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Alcénylsuccinimides, leur procédé de préparation et leur emploi comme additifs pour lubrifiants

La présente invention a pour objet de nouveaux alcénylsuccinimides dérivés d'aminoalcoxyamines, leur procédé de préparation et leur application comme additifs pour lubrifiants.

Des alcénylsuccinimides dérivés d'aminoalcoxyamines utilisables comme additifs pour lubrifiants ont déjà été décrits dans les demandes de brevets français 75.12136 et 75.39691 déposées par la Société OROGIL; ces alcénylsuccinimides sont préparés à partir d'aminoalcoxyamines dérivant de la cyanoéthylation de la triéthanolamine par exemple par de l'acrylonitrile suivie d'une hydrogénation. Les produits obtenus présentaient de très bonnes caractéristiques comme additifs pour huiles lubrifiantes.

La demanderesse a trouvé de nouveaux alcénylsuccinimides dérivés d'aminoalcoxyamines apportant aux huiles lubrifiantes d'aussi bonnes performances que les additifs antérieurs cités ci-dessus, et ce à concentration inférieure.

Ces nouveaux alcénylsuccinimides dérivés d'aminoalcoxyamines sont caractérisés en ce qu'ils ont pour formule:

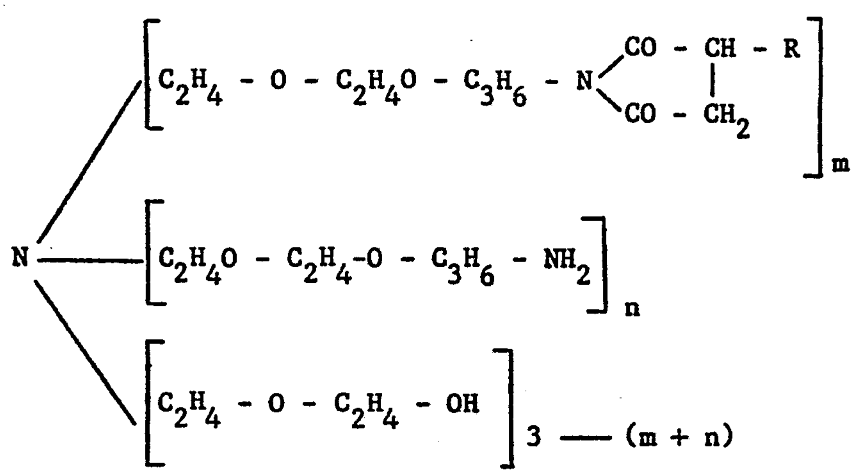

où R représente un groupe alcényl contenant de 20 à 200 atomes de carbone,
m est égal à 1,2 ou 3, n est égal à 0,1 ou 2, m + n étant égal à 1,2 ou 3.

Ces nouveaux alcénylsuccinimides objet de l'invention peuvent être préparés par action d'un anhydride alcénylsuccinique dans lequel le groupe alcényle renferme de 20 à 200 atomes de carbone avec au moins une aminoalcoxyamine de formule:

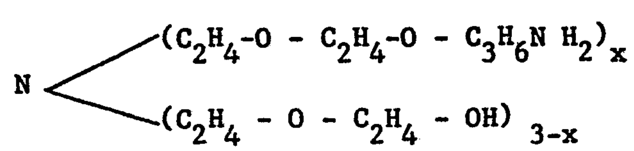

où x est égal à 1,2 ou 3.

La réaction de condensation de l'anhydride alcénylsuccinique et des aminoalcoxyamines a lieu à une température comprise entre 120 et 230°C, de préférence entre 140 et 180°C selon un rapport nombre d'équivalents amine/nombre d'équivalents acide compris entre 0,4 et 0,6.

On entend par nombre d'équivalents amine le nombre de motifs $—NH_2$ des aminoalcoxyamines mises en oeuvre; on entend par nombre d'équivalents acide le nombre de motifs

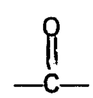

de l'anhydride alcénylsuccinique mis en oeuvre; théoriquement, il faut 1 équivalent amine pour 2 équivalents acide pour former un noyau succinimide.

La réaction est éventuellement réalisée en présence d'un diluant pour diminuer la viscosité du

milieu réactionnel; ledit diluant sera de préférence choisi parmi les huiles lubrifiantes, huiles de base dont des exemples seront donnés ci-après.

Les anhydrides alcénylsucciniques mis en oeuvre sont préparés d'une manière connue, par exemple par condensation par voie thermique (brevet américain n° 3.306.907) de l'anhydride maléique sur une polyoléfine de poids moléculaire moyen compris entre 400 et 4000. Ladite polyoléfine est choisie parmi les oligomères ou polymères d'oléfines en $C_2$—$C_{30}$ éventuellement ramifiées, ou les copolymères desdites oléfines entre elles ou avec des comonomères diéniques ou vinylaromatiques; parmi ces polyoléfines on peut citer de préférence les oligomères d'$\alpha$-monooléfines en $C_2$—$C_{20}$ tels que les oligomères de l'éthylène, du propylène, du butène-1, de l'isobutène, du cyclohexyl-3 butène-1, du méthyl-2 propyl-5 hexène-1, les copolymères de ces $\alpha$ oléfines entre elles ou avec des oléfines internes, ainsi que les copolymères de l'isobutène avec un comonomère choisi parmi le butadiène, le styrène, l'hexadiène-1,3 ou les diènes et triènes conjugués ou non.

L'opération de condensation peut également être réalisée en présence de chlore (brevet américain n° 3.231.587 et brevet belge n° 805.486), d'iode (brevet anglais n° 1.356.802) ou de brome (demande de brevet français n° 74.18915 déposée le 31 Mai 1974 au nom de la Société Française dite RHONE—PROGIL); cette opération peut être aussi réalisée au depart de polyoléfines monochlorées ou monobromées, tel que cela est signalé dans le brevet français publié sous le n° 2.042.558.

Les aminoalcoxyamines mises en oeuvre pour préparer les alcénylsuccinimides, objet de l'invention, peuvent être obtenues par cyanoéthylation de la tris (hydroxy-5 oxa-3 pentyl)amine par de l'acrylonitrile selon un rapport molaire acrylonitrile/amine compris entre 1 et 4,5 suivie d'une hydrogénation des nitriles obtenus.

Un rapport molaire acrylonitrile/amine supérieur ou égal à 3,5 permet d'obtenir sélectivement la tris (amino-9 dioxa-3,6 nonyl)amine.

Un rapport molaire acrylonitrile/amine inférieur à 3,5 permet d'obtenir un mélange d'amines pouvant contenir de la N,N,N tris-amino-9 dioxa-3,6 nonyl)amine, de la N(hydroxy-5 oxa-3 pentyl)NN bis (amino-9 dioxa-3,6 nonyl)amine et de la NN bis (hydroxy-5 oxa-3 pentyl)N(amino-9 dioxa-3,6 nonyl)amine.

La réaction de cyanoéthylation de la tris(hydroxy-5 oxa-3 pentyl)amine peut être conduite selon les procédés généraux décrits dans la littérature (The Chemistry of Acrylonitrile, 2ème édition, Am. Cyanamid Corp. New York 1958 page 24 — H.A. BRUSON, Organic Reactions 1949, *5,* 79 — U.S. 2.326.721). Elle est effectuée habituellement en présence d'un catalyseur basique tel que le sodium, le potassium, les oxydes, hydroxydes, alcoolates ou amidures de métaux alcalins, les bases d'ammonium quaternaire telles que l'hydroxide de triméthyl benzylammonium. La quantité d'agent alcalin à mettre en oeuvre varie de 0,1 à 5% par rapport au poids d'alcanolamine engagé. En général, une quantité inférieure à 1% suffit à provoquer l'effet désiré.

La réaction de cyanoéthylation est réalisée à une température comprise entre 0 et 100°C de préférence entre 30 et 50°C.

La réaction peut être conduite en présence ou non d'un solvant organique. A titre de solvants, on peut utiliser par exemple le benzène, le dioxane, la pyridine, l'acétonitrile. On peut également effectuer la réaction en présence d'eau.

Lors de l'introduction des réactifs, il est préférable de dissoudre ou disperser le catalyseur dans l'alcanolamine éventuellement diluée par le solvant et d'additionner le nitrile dans le milieu sous agitation.

Le produit de cyanoéthylation obtenu précédemment peut être hydrogéné directement ou éventuellement après isolement par tout moyen approprié. On peut opérer sa réduction par les procédés usuels de réduction des nitriles —HOUBEN—WEYL. Methoden der Organischen Chemie — 4ème Edition — Band XI/559 (1957). La voie la plus couramment utilisée est l'hydrogénation en présence de catalyseurs au nickel ou cobalt déposés ou non sur support. Mais on utilise plus particulièrement le nickel Raney ou le cobalt Raney mis en jeu dans une proportion de 5 à 30% par rapport au poids du nitrile traité.

Il est avantageux de réaliser l'hydrogénation avec de tels catalyseurs dans l'ammoniac liquide ou de préférence en présence d'une base en milieu aqueux ou organique. Comme agent basique, on peut utiliser l'hydroxyde de baryum, de sodium, de potassium ou de lithium ou les hydroxydes d'ammonium quaternaire.

La quantité de base mise en oeuvre exprimée par rapport au poids de nitrile traité est d'environ 1 à 30%.

L'hydrogénation peut se dérouler dans un solvant organique inerte dans les conditions de la réaction. On peut faire appel à des alcools aliphatiques inférieurs comme le méthanol, l'éthanol, le propanol, l'isopropanol; à des diols comme l'éthanediol-1,2, le propanediol-1,2; à des éthers oxydes comme l'éther éthylique, l'éther butylique, le diméthoxyéthane, le tétrahydrofuranne, le dioxanne; à dés éthers-oxydes partiels de composés polyhydroxylés comme l'éther monométhylique (ou monoéthylique) de l'éthylèneglycol.

La réaction peut être utilisée à une température comprise entre 30 et 100°C de préférence entre 60 et 80°C et sous une pression d'hydrogène de 10 à 200 bars; en général une pression de 20 à 30 bars convient bien pour effectuer l'hydrogénation.

En pratique, le produit de cyanoéthylation est additionné progressivement dans la suspension du catalyseur maintenu sous la pression d'hydrogène choisie.

Après la réaction d'hydrogénation, le catalyseur est séparé, l'agent basique est neutralisé, le solvant est éliminé et les amino-alcoxyamines peuvent être distillées sous pression réduite.

La présente invention vise également les huiles lubrifiantes améliorées par addition de 1 à 10% de leur poids, des alcénylsuccinimides ci-dessus décrits apportant leurs propriétés détergentes-dispersantes, antirouille et antimousse aux dites huiles.

Les huiles lubrifiantes que l'on peut utiliser peuvent être choisies parmi les huiles lubrifiantes très variées, comme les huiles lubrifiantes de base naphténique, de base paraffinique, et de base mixte, d'autres lubrifiantes hydrocarbonés, par exemple des huiles lubrifiantes dérivées de produits de la houille, et des huiles synthétiques, par exemple des polymères d'alkylène, des polymères du type oxyde d'alkylène et leurs dérivés, y compris les polymères d'oxyde d'alkylène préparés en polymérisant l'oxyde d'alkylène en présence d'eau ou d'alcools, par exemple l'alcool éthylique, les esters d'acides di-carboxyliques, des esters liquides d'acides du phosphore, des alkylbenzènes et des dialkyl benzènes, des polyphényles, des alkyl biphényl éthers, des polymères du silicium.

La quantité de nouveaux additifs à ajouter est fonction de l'utilisation future de l'huile lubrifiante à améliorer; ainsi pour huile pour moteur à essence la quantité d'additifs à ajouter sera de 1 à 7%; pour une huile pour moteur diesel elle sera de 4 à 10%.

Les huiles lubrifiantes améliorées peuvent également contenir des adjuvants anti-oxydants, anticorrosion etc. ...

Les exemples suivants sont donnés à titre indicatif et ne peuvent être considérés comme une limite du domaine et de l'esprit de l'invention.

## EXEMPLE 1

On charge dans un ballon tricol d'un litre 70 g d'huile 100 N, 430 g d'anhydride polyisobuténylsuccinique (PIBSA) d'indice d'acide égal à 77,7 (exprimé en mg de potasse nécessaire pour neutraliser 1 g de produit) obtenu par condensation de l'anhyride maléique avec un polyisobutène de masse moléculaire environ égale à 900.

On chauffe le milieu réactionnel à 120°C sous agitation puis on ajoute en 1 heure, 70 g de tris (amino-9 dioxa-3,6 nonyl)amine.

La température est portée pendant 3 h à 160°C sous une pression réduite de 50 mm Hg. Le produit obtenu est constitué en majeure partie de tris polyisobutènyl succinimide et contient 1,7% d'azote.

La tris (amino-9 dioxa-3,6 nonyl)amine mise en oeuvre peut être préparée de la manière suivante par cyanoéthylation de la tris (hydroxy-5 oxa-3 pentyl)amine par de l'acrylonitrile avec un rapport molaire acrylonitrile/amine supérieur à 3,5, puis hydrogénation du nitrile obtenu.

Cyanoéthylation

Dans un ballon de 250 ml muni d'un agitateur mécanique, d'un thermomètre, d'un réfrigérant et d'une ampoule à brome, on introduit 70,5 g de tris (hydroxy-5 oxa-3 pentyl)amine (soit 0,25 mole), 0,46 ml de soude à 36° Bé (soit $4{,}6.10^{-3}$ mole). Le mélange est chauffé à 38°C et on introduit alors 53 g d'acrylonitrile (1 mole) en 1 heure.

En fin d'addition d'acrylonitrile on ajoute 0,6 ml d'HCl (d = 1,19) pour neutraliser la soude; le chlorure de sodium précipite. Après filtration, on obtient une huile jaune paille, constituée de tris (cyano-8 dioxa-3,6 octyl)amine.

Hydrogénation

Ce produit est hydrogéné dans un autoclave sous une pression d'hydrogène de 40 bars à 60°C, en présence de 60 g de nickel Raney en suspension dans 130 ml d'éthanol et de 0,75 ml de soude.

La réaction s'effectue en 3 heures. Après refroidissement, l'autoclave est dégazé et ouvert sous azote. On filtre. Après élimination du catalyseur, on obtient 110 g d'huille, ce qui correspond à un rendement de 97%.

Le produit est constitué de tris (amino-9 dioxa-3,6 nonyl)amine avec une pureté de 98%.

## EXEMPLE 2

On charge dans un ballon tricol d'un litre, 50 g d'huile 100 N, 430 g d'anhydride polyisobuténylsuccinique (PIBSA) d'indice d'acide égal à 77,7 (exprimé en mg de potasse nécessaire pour neutraliser 1 g de produit) obtenu par la condensation de l'anhydride maléique avec un polyisobutène de masse moléculaire environ égale à 900.

On chauffe le milieu réactionnel à 120°C sous agitation, puis on ajoute en 1 heure, 45,2 g d'un mélange composé de 85% de tris (amino-9 dioxa-3,6 nonyl)amine, de 12% de bis (amino-9 dioxa-3,6 nonyl) N (hydroxy-5 oxa-3 pentyl)amine et de 3% de N(amino-5 dioxa-3,6 nonyl)NN bis (hydroxy-5 oxa-3 pentyl) amine.

La température est portée pendant 3 heures à 160°C sous une pression réduite de 50 mmHg. Le produit limpide obtenu est constitué en majeure partie de tris polyisobuténylsuccinimide et contient un pourcentage d'azote de 1,08%.

Le mélange d'aminoalcoxyamines mis en oeuvre pour réaliser l'opération d'imidation peut être obtenu de la manière suivante:

Cyanoéthylation

Dans un ballon de 250 ml muni d'un agitateur mécanique, d'un thermomètre, d'un réfrigérant et d'une ampoule à brome, on introduit 70,5 g de tris (hydroxy-5 oxa-3 pentyl)amine (0,25 mole), 0,46 ml de soude à 36° Bé ($4,6.10^{-3}$ mole).

Le mélange est chauffé à 38°C et on introduit alors 42 g d'acrylonitrile (0,79 mole) en 1 heure. En fin d'addition d'acrylonitrile, on ajoute 0,6 ml d'HCl (d = 1,19) pour neutraliser la soude. Le chlorure de sodium précipite. Après filtration on obtient une huile de couleur jaune paille.

Hydrogénation

Dans un autoclave en inox de 1 litre, muni d'un système d'agitation, équipé d'une réserve d'hydrogène de 250 ml, on introduit 110,3 g d'huile brute précédemment fabriquée en solution dans 110 ml d'éthanol absolu, puis on ajoute 56,9 g de nickel Raney en suspension dans 130 ml d'éthanol et 0,75 ml de soude (36° Bé) soit $4,8.10^{-3}$ mole

L'autoclave est fermé et purgé par 3 fois à l'azote (pression 10 bars) puis l'hydrogène est introduit. On monte la pression à 40 bars à température ambiante à l'aide du mano détendeur commandant l'arrivée d'hydrogène de la réserve. Le mélange est chauffé à 60°C. L'absorption d'hydrogène cesse au bout de 2 H 30. Après refroidissement, l'autoclave est dégazé et ouvert sous azote. On filtre, lave le catalyseur à l'éthanol. Après élimination de l'éthanol, on obtient une huile jaune.

On obtient 105,4 g de produit, ce qui correspond à un rendement de 93%.

Le produit est constitué de:

— 85% de tris (amino-9 dioxa-3,6 nonyl)amine
— 12% de bis NN (amino-9 dioxa-3,6 nonyl)N(hydroxy-5 oxa-3 pentyl)amine
— 3% de bis NN (hydroxy-5 oxa-3 pentyl) N (amino-9 dioxa-3,6 nonyl)amine.

EXEMPLE 3

Dans les conditions décrites dans les exemples 1 et 2, on chauffe à 102°C 500 g d'un mélange composé de 430 g d'anhydride polyisobuténylsuccinique décrit dans les exemples 1 et 2 d'indice d'acide égal à 77,7 mg et de 70 g d'huile 100 N.

On introduit alors en 1 h 70 g d'un mélange de polyamines composé de 44% en poids de NN bis (hydroxy-5 oxa-3 pentyl) N (amino-9 dioxa-3,6 nonyl)amine, 44% de N (hydroxy-5 oxa-3 pentyl) NN bis (amino-9 dioxa-3,6 nonyl)amine et de 12% de tris (amino-9, dioxa-3,6 nonyl)amine.

La température est portée pendant 3 heures à 160°C sous une pression réduite de 50 mmHg. Le produit obtenu est constitué d'un mélange de polyisobuténylsuccinimides et contient un taux d'azote de 1,2%.

Le mélange d'aminoalcoxyamines mis en oeuvre pour réaliser l'opération d'imidation est obtenu de la manière suivante:

Cyanoéthylation

Avec le même appareillage que celui décrit dans l'exemple précédent, on effectue la réaction suivante:

A 70,5 g (0,25 mole) de tris (hydroxy-5 oxa-3 pentyl) amine on ajoute 0,46 mole de soude à 36° Bé. Le mélange est chauffé à 38°C et on introduit alors 20 g d'acrylonitrile. On ajoute 0,6 ml d'HCl (d = 1,19) pour neutraliser la soude. Le chlorure de sodium précipite. Après filtration, on obtient une huile de couleur jaune paille dont la composition est la suivante:

| | |
|---|---|
| Triol résiduel | 10% |
| Triol monocyanoéthylé | 40% |
| Triol dicyanoéthylé | 40% |
| Triol tricyanoéthylé | 10% |

Hydrogénation

Ce mélange est hydrogéné selon le mode opératoire décrit dans l'exemple précédent. Le mélange est chauffé à 60°C. L'absorption d'hydrogène au bout de 1 h 30 cesse. Après refroidissement, l'autoclave est dégazé et ouvert sous azote. On filtre et lave le catalyseur à l'éthanol. Après élimination de l'éthanol, on effectue une distillation flash à 210°C sous 0,5 mm de Hg pour récupérer en tête le triol non transformé et en pied le mélange d'aminoalcoxyamines qui se compose de:

44% de NN bis (hydroxy-5 oxa-3 pentyl)N(amino-9 dioxa-3,6 nonyl)amine
44% de N(hydroxy-5 oxa-3 pentyl)NN bis (amino-9 dioxa-3,6 nonyl)amine
12% de NNN tris (amino-9 dioxa-3,6 nonyl)amine.

EXEMPLE 4

Les produits de l'invention obtenus selon les exemples ci-dessus ont été testés sur le plan de leurs propriétés dispersantes dans les lubrifiants. L'étude du pouvoir dispersif a été conduite selon la méthode à la tache décrite dans le tome 1 de l'ouvrage de A. Schilling "Les huiles pour moteurs et le graissage des moteurs" édition 1962 pages 89—90. La méthode est réalisée à partir de 20 g d'huile SAE 30 auxquels sont ajoutés 5 g de Sludge provenant d'un moteur Petter $Av_1$ et contenant environ 2% de matières charbonneuses.

L'huile SAE 30 a été préalablement additivée à l'aide de la formulation suivante (les quantités des différents additifs étant données pour 1 kg d'huile):

— 40 g de dispersant obtenu aux exemples 1 à 3
— 30 mmoles d'alkylbenzène sulfonate de calcium
— 30 mmoles d'alkylphénate de calcium suralcalinisé
—15 mmoles de dihexyldithiophosphate de zinc.

Le mélange huile additivée-sludge est séparé en 5 fractions qui sont agitées et soumises aux 5 traitements thermiques suivants:

— une fraction soumise à un chauffage à 50°C pendant 10 mn,
— une fraction soumise à un chauffage à 200°C pendant 10 mn,
— une fraction soumise à un chauffage à 250°C pendant 10 mn,
— une fraction soumise à un chauffage à 50°C pendant 10 mn, en présence de 1% d'eau
— une fraction soumise à un chauffage à 200°C pendant 10 mn en présence de 1% d'eau.

Une goutte de chaque mélange obtenu après traitement thermique est déposée sur un papier filtre.

La cotation est effectuée au bout de 48 heures. Pour chaque tache on calcule le rapport des diamètres respectifs de la tache du produit dispersé et de la tache d'huile. Plus ce rapport est élevé, meilleure est la dispersion vis-à-vis du sludge. Les résultats de ces cotations X 1000 figurent au tableau final.

EXEMPLE 5

Les propriétés antirouille des produits des exemples 1 à 3 sont testées dans l'huile SAE 30 additivée à l'aide de la formulation de l'exemple précédent à savoir, pour 1 kg d'huile:

— 40 g des produits des exemples 1 à 3
— 30 mmoles d'alkylbenzènesulfonate de calcium
— 30 mmoles d'alkylphénate de calcium suralcalinisé
— 15 mmoles de dihexyldithiophosphate de zinc.

Le principe du test consiste à ajouter à l'huile étudiée les produits susceptibles de se trouver dans les gaz de blowby et jouant un rôle dans la formation de la rouille sur l'ensemble poussoir et tige de soupape, et à immerger pendant un certain temps dans le mélange ainsi formé une pièce faisant partie de l'ensemble précédent. La rouille formée est cotée visuellement.

Le test est réalisé par:

— introduction de 700 g d'huile dans un ballon et chauffage à 50°C sous agitation,
— addition successive, lorsque la température est stabilisée, de 20 cm3 d'une solution aqueuse de formol à 30%, 4,5 cm3 de méthanol, 5 cm3 d'un mélange 50/50 de dichloréthane et dibromoéthane et 8,5 cm3 d'une solution aqueuse d'acide nitrique à 78,5%,
— immersion pendant 19 h d'une pièce de l'ensemble poussoir et tige de soupape.

Loroqu'il n'y a pas d'attaque, on attribue au produit la note 20; lorsque l'attaque est très importante on attribue la note 0. Les résultats des cotations figurent au tableau final.

EXEMPLE 6

Les propriétés antimousse des produits des exemples 1 à 3 sont mesurées selon la norme ASTM D 892.63. Dans l'huile SAE 30 additivée à l'aide de la formulation indiquée aux exemples 4 et 5.

Les résultats des cotations figurent au tableau final.

A titre comparatif on donne dans le tableau final le résultat des tests des propriétés dispersantes, anti-rouille et anti-mousse, réalisés dans les conditions décrites aux exemples 4 à 6, sur un succinimide antérieur à savoir:

— Le tris (polyisobuténylsuccinimide) dérivé de la tris(amino-6 oxa-3 hexyl) amine et d'un PIBSA d'indice d'acide 74 obtenu par condensation de l'anhydride maléique et d'un polyisobutène de masse moléculaire voisine de 1000.

| Produits | Performances | | |
|---|---|---|---|
| | dispersion | anti-rouille | anti-mousse |
| Celui de l'exemple 1 | 450 | 15 | 10–05 |
| Celui de l'exemple 2 | 430 | 17 | 10–05 |
| Celui de l'exemple 3 | 400 | 15 | 10–05 |
| Comparatif | 390 | 12 | 20–50 |

**Revendications**

1. Nouveaux alcénylsuccinimides dérivés d'aminoalcoxyamines et présentant un groupe alcényl contenant de 20 à 200 atomes de carbone, caractérisés en ce qu'ils ont pour formule:

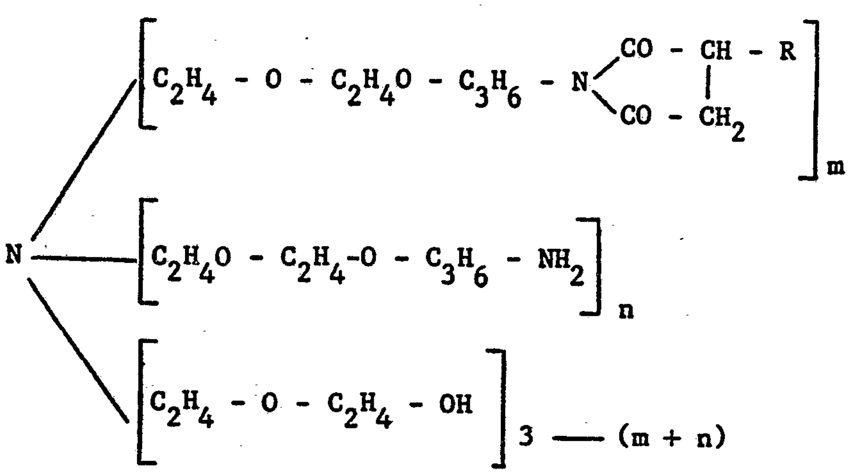

où R représente ledit groupe alcényl contenant de 20 à 200 atomes de carbone;
m est égal à 1,2 ou 3, n est égal à 0,1 ou 2, m + n étant égal à 1,2 ou 3.

2. Alcénylsuccinimides selon la revendication 1 caractérisés en ce que R est un groupe polyisobuténYle.

3. Procédé de préparation des alcénylsuccinimides faisant l'objet de la revendication 1, par condensation d'au moins une aminoalcoxyamine avec un anhydride alcénylsuccinique dans lequel le groupe alcényle renferme de 20 à 200 atomes de carbone caractérisé en ce que ladite amino-alcoxyamine a pour formule:

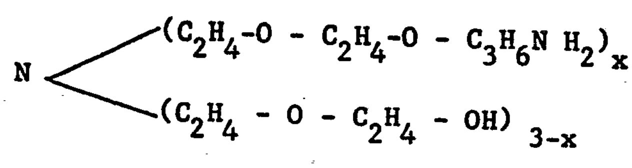

où x est égal à 1,2 ou 3 et en ce que la condensation est réalisée avec un rapport nombre d'équivalents amine/nombre d'équivalents acide compris entre 0,4 et 0,6 à une température comprise entre 120 et 230°C.

4. Procédé selon la revendication 3 caractérisé en ce que le groupe alcényl est un groupe polyisobutényle.

5. Application des nouveaux alcénylsuccinimides faisant l'objet de la revendication 1 ou de la revendication 2 comme additifs pour huiles lubrifiantes.

**Patentansprüche**

1. Neue Alkenylsuccinimide, welche Derivate von Aminoalkoxyaminen sind und eine Alkenylgruppe mit 20—200 Kohlenstoffatomen aufweisen, dadurch gekennzeichnet daß sie der Formel:

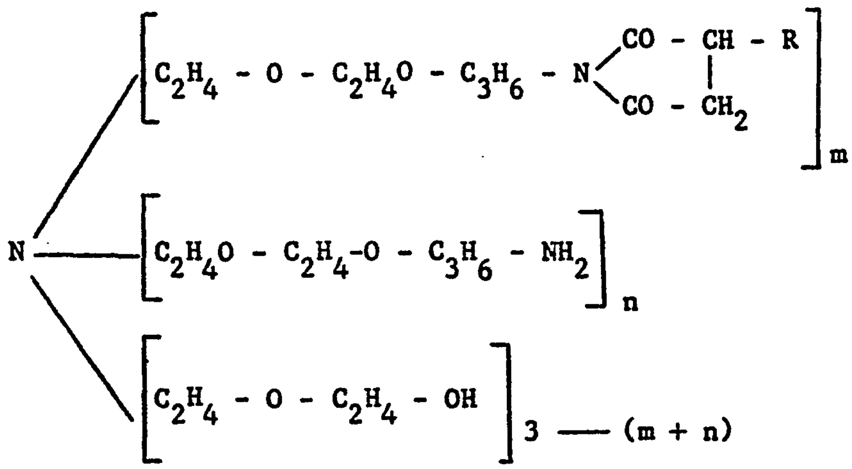

entsprechen, in der R die Alkenylgruppe mit 20—200 Kohlenstoffatomen bedeutet,
m für 1, 2 oder 3 steht
n für 0, 1 oder 2 steht
m + n für 1, 2 oder 3 steht.

2. Alkenylsuccinimide nach Anspruch 1, dadurch gekennzeichnet, daß R eine Polyisobutenylgruppe darstellt.

3. Verfahren zur Herstellung der Alkenylsuccinimide nach Anspruch 1 durch Kondensation von mindestens einem Aminoalkoxyamin mit einem Alkenylbernstein saüreanhydrid, in welchem die Alkenylgruppe 20—200 Kohlenstoffatome enthält, dadurch gekennzeichnet, daß dieses Aminoalkoxyamin der Formel:

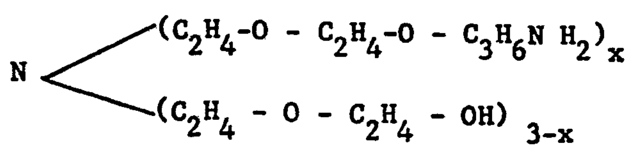

entspricht, in welcher x für 1, 2 oder 3 steht, daß die Kondensation bei einem Verhältnis der Amin-Äquivalente/Anzahl der Saüre-Äquivalente von 0,4—0,6 und bei einer Temperatur von 120—230°C erfolgt.

4. Verfahren nach Anspruch 3, dadurch gekennzeichnet, daß die Alkenylgruppe eine Polyisobutenylgruppe ist.

5. Verwendung der neuen Alkenylsuccinimide nach Anspruch 1 oder Anspruch 2 als Zusatzstoffe für Schmieröle.

**Claims**

1. New alkenylsuccinimides derived from aminoalcoxyamines and having an alkenyl group containing from 20 to 200 carbon atoms characterised in that they have the formula:

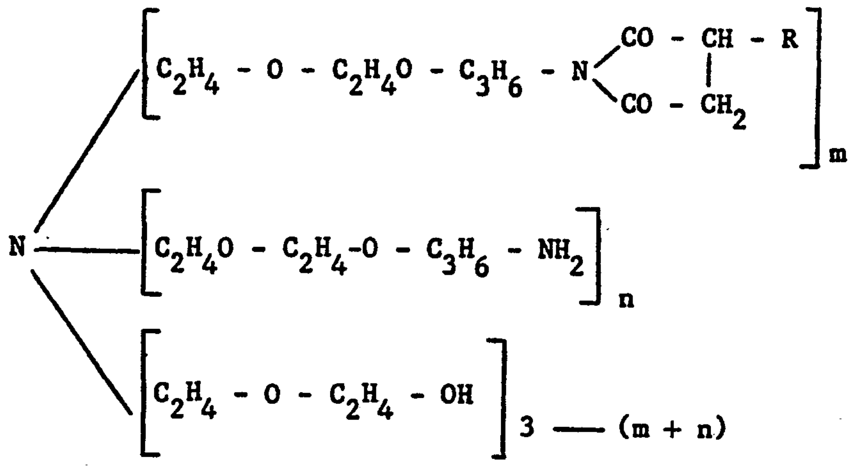

where R represents the said alkenyl group containing from 20 to 200 carbon atoms; m is equal to 1,2 or 3; n is equal to 0,1 or 2; m + n being equal to 1, 2 or 3.

2. Alkenylsuccinimides according to claim 1 characterised in that R is a polyisobutenyl group.

3. Process for preparation of alkenylsuccinimides according to claim 1, by condensation of at least one aminoalkoxyamine with an alkenylsuccinic anhydride, in which the alkenyl group contains from 20 to 200 carbon atoms, characterised in that the said aminoalkoxyamine has the formula:

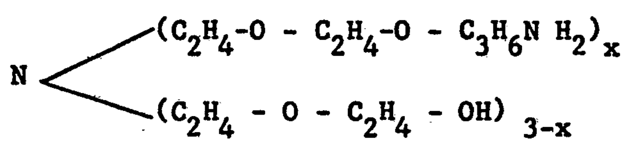

where x is equal to 1, 2 or 3 and in that the condensation step is realized with a ratio number of amine equivalents/number of acid equivalents of between 0,4 and 0,6 at a temperature between 120 and 230°C.

4. Process according to claim 3 characterised in that the alkenyl group is a polyisobutenyl group.

5. Application of the new alkenylsuccinimides according to claim 1 or to claim 2 as lubricating oil additives.